# EUROPEAN PATENT APPLICATION

(11) **EP 4 625 614 A2**
(43) Date of publication of application: **01.10.2025**
(21) Application number: 25196749.3
(22) Date of filing: 13.07.2023
(51) Int. Cl.: H01M 10/54

(54) **METHOD FOR RECOVERING METALS**

(30) Priority: 14.07.2022 JP 2022113466
(62) Divisional of application: 23748617.0
(71) Applicant: JX Metals Circular Solutions Co., Ltd., Tokyo 105-8417 (JP)
(72) Inventor: SHIKADA, Kei, Hitachi-shi, Ibaraki, 317-0056 (JP); HIGUCHI, Naoki, Hitachi-shi, Ibaraki, 317-0056 (JP); ARAKAWA, Junichi, Hitachi-shi, Ibaraki, 317-0056 (JP)
(74) Representative: Arnold & Siedsma

(57) **Abstract**

Provided is a method for recovering metals from battery powder of lithium ion battery waste, the method comprising: an acid leaching step of leaching the metals in the battery powder into an acidic leaching solution to obtain a metal-containing solution containing lithium ions and other metal ions; a metal separation step of separating the other metal ions from the metal-containing solution; and, after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions, wherein the acidic solution obtained in the electrodialysis step is mixed with the acidic leaching solution, the metal-containing solution comprises iron, and the fluoride ions are precipitated by the iron.

## Description

### Technical Field

This specification discloses a method for recovering metals.

### Background Art

In recent years, it has been widely studied for recovery of valuable metals such as cobalt and nickel contained in lithium ion battery waste discarded for expired product life, manufacturing defects or other reasons, in terms of effective utilization of resources.

The process of recovering valuable metals from lithium ion battery waste can include, for example, roasting or other predetermined dry processes of lithium ion battery waste, and wet processes of the battery powder obtained after the dry processes.

Specifically, in the wet processes, metals such as cobalt, nickel, manganese, lithium, aluminum, and iron in the battery powder are leached with an acid to obtain a metal-containing solution containing the metals dissolved. Aluminum ions, iron ions, manganese ions, and the like are then sequentially or simultaneously removed from the metal-containing solution by neutralization or solvent extraction, as described, for example, in Patent Literature 1. Cobalt ions and nickel ions in the metal-containing solution are then separated by solvent extraction. After separating the nickel ions by extraction, a metal-containing solution is obtained in which lithium ions remain. The metal-containing solution thus obtained is subjected to, for example, concentration of lithium ions by repeating solvent extraction.

### Citation List

### Patent Literature

PTL 1: WO 2018/181816 A1

### Summary of Invention

### Technical Problem

By the way, the metal-containing solution obtained after separating cobalt ions and/or nickel ions or other metals by solvent extraction or the like contains lithium ions. If a lithium hydroxide solution can be produced therefrom, it can be effectively used as a pH adjusting agent or the like.

However, the metal-containing solution contains impurities such as fluoride ions. If the lithium hydroxide solution can be obtained by separating the impurities from such a metal-containing solution, it is desirable to process the solution containing the separated impurities properly to utilize it effectively.

This specification provides a method for recovering metals, which can produce a lithium hydroxide solution from a metal-containing solution and appropriately process the impurities separated at that time.

### Solution to Problem

A method for recovering metals disclosed herein is a method for recovering metals from battery powder of lithium ion battery waste, the method comprising: an acid leaching step of leaching the metals in the battery powder into an acidic leaching solution to obtain a metal-containing solution containing lithium ions and other metal ions; a metal separation step of separating the other metal ions from the metal-containing solution; and, after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions, wherein the acidic solution obtained in the electrodialysis step is mixed with the acidic leaching solution so that the acidic leaching solution comprises calcium in the acid leaching step, and the fluoride ions are precipitated by the calcium.

A method for recovering metals disclosed herein is a method for recovering metals from battery powder of lithium ion battery waste, the method comprising: an acid leaching step of leaching the metals in the battery powder into an acidic leaching solution to obtain a metal-containing solution containing lithium ions and other metal ions; a metal separation step of separating the other metal ions from the metal-containing solution, the metal separation step preferably comprising neutralization of increasing a pH of the metal-containing solution to precipitate at least a part of the other metal ions; and, after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions, wherein the acidic solution obtained in the electrodialysis step is mixed with the metal-containing solution obtained in the acid leaching step so that the metal-containing solution comprises iron and/or calcium, preferably during the neutralization, and the fluoride ions are precipitated by the iron and/or calcium.

### Advantageous Effects of Invention

According to the method for recovering metals as described above, it is possible to produce a lithium hydroxide solution from a metal-containing solution and appropriately process the impurities separated at that time.

### Brief Description of Drawings

Fig. 1 is a flow chart showing an example of a method for recovering metals including an impurity removal method according to an embodiment.
Fig. 2 is a flow chart showing an example of a preprocessing step for obtaining battery powder from lithium ion battery waste.
Fig. 3 is a flow chart showing an example of an acid leaching step.
Fig. 4 is a cross-sectional view schematically showing an example of a bipolar membrane electrodialysis device that can be used in an electrodialysis step included in an impurity removal method according to an embodiment.
Fig. 5 is a view showing components of each solution before and after electrodialysis in Test Example 1.
Fig. 6 is a diagram showing a composition or quality and distribution rate of battery powder, each liquid and residue in Test Example 2 of Examples.
Fig. 7 is a diagram showing a F concentration of battery powder as well as each liquid, and a F grade of a residue, as well as a distribution rate in Test Example 3 of Examples.
Fig. 8 is results showing the form of aluminum in a neutralized residue that changes by an F/Al molar ratio on a graph illustrating a relationship between an aluminum grade and a fluorine grade of a raw material of Test Example 4.
Fig. 9 is results of whether or not a predetermined low aluminum ion concentration can be achieved in a leaching step and a neutralization step, on a graph illustrating a relationship between an aluminum grade and a fluorine grade of a raw material of Test Example 4.

### Description of Embodiments

Embodiments of the method for recovering metals described above will be described below in detail.

An embodiment of the method for recovering metals is a method for recovering metals from battery powder of lithium ion battery waste. The method includes: an acid leaching step of leaching the metals in the battery powder into an acidic leaching solution to obtain a metal-containing solution containing lithium ions and other metal ions; a metal separation step of separating the other metal ions from the metal-containing solution; and, after the metal separation step, an electrodialysis step of subjecting the metal-containing solution containing lithium ions, and fluoride ions as impurities, to electrodialysis using a bipolar membrane to obtain a lithium hydroxide solution and an acidic solution comprising fluoride ions.

In an embodiment, the acidic solution obtained in the electrodialysis step is mixed with the metal-containing solution obtained in the acid leaching step. Thus, the use of the acidic solution obtained in the electrodialysis step for the acid leaching step allows the acidic solution to be effectively utilized. On the other hand, when the acidic solution obtained in the electrodialysis step contains fluoride ions, the fluoride ions are circulated in a series of steps from the acid leaching to electrodialysis as the acidic solution is returned to the acid leaching step, and the fluoride ions are accumulated in the steps. Therefore, in the acid leaching step, the acidic leaching solution is allowed to contain calcium by, for example, adding calcium. **In** this case, the fluoride ions contained in the acidic leaching solution by mixing with the acidic solution containing fluoride ions are precipitated during the acid leaching step, so that the resulting precipitate can be removed by solid-liquid separation or the like.

**In** another embodiment, the metal separation step includes neutralization of increasing a pH of the metal-containing solution to precipitate at least a part of the other metal ions and the acidic solution obtained in the electrodialysis step is mixed with the metal-containing solution obtained in the acid leaching step. Also in this case, the acidic solution can be effectively utilized, while the fluoride ions contained in the acidic solution are circulated and accumulated in a series of steps. Therefore, in the metal separation step, the metal-containing solution contains iron and/or calcium during the neutralization, such as by adding iron and/or calcium. **In** this case, since the fluoride ions contained in the metal-containing solution by mixing with the acidic solution containing fluoride ions are precipitated during the neutralization, they can be removed by solid-liquid separation or the like.

By precipitating and removing the fluoride ions as described above, the accumulation and concentration of the fluoride ions caused by mixing the acidic solution with the acidic leaching solution or the metal-containing solution can be suppressed. Therefore, according to this, the fluoride ions as impurities separated from the lithium hydroxide solution in the electrodialysis step are appropriately processed, and the acidic solution obtained together with the lithium hydroxide solution can be effectively utilized.

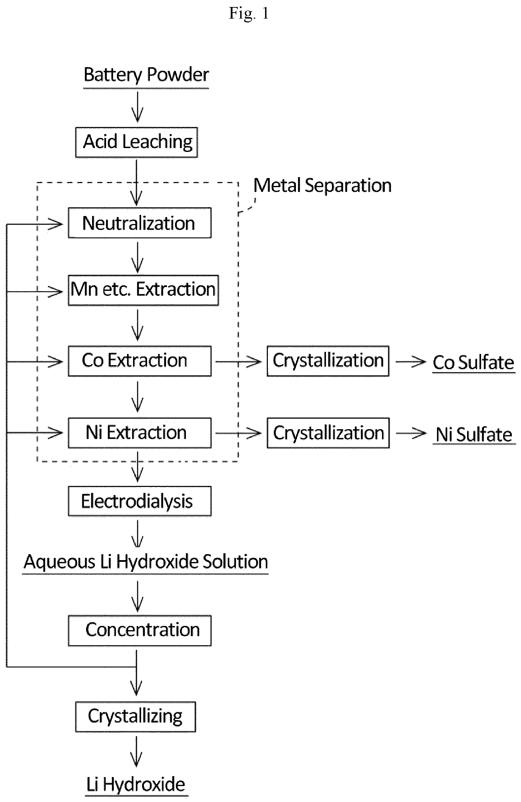

The method for recovering metals according to the embodiment as described herein, as illustrated in Fig. 1, carries out, as a wet process, the acid leaching step of leaching the battery powder of the lithium ion battery waste with an acid to obtain a metal-containing solution, and the metal separation step and the electrodialysis step as described above. The lithium hydroxide solution obtained in the electrodialysis step is optionally concentrated and then used as a pH adjusting agent in the metal separation step. **In** Fig. 1, the metal separation step includes neutralization, solvent extraction of manganese and/or aluminum ions (Mn etc. Extraction), solvent extraction of cobalt ions, and solvent extraction of nickel ions. However, depending on the type of metal ions other than lithium ions contained in the metal-containing solution, at least one of the neutralization and multiple solvent extraction processes may be omitted.

### (Lithium Ion Battery Waste)

The lithium ion battery waste of interest is lithium ion secondary batteries which can be used in various electronic devices such as mobile phones and which have been discarded due to the expired life of the product, manufacturing defects or other reasons. The recovery of valuable metals from such lithium ion battery waste is preferred in terms of effective utilization of resources.

The lithium ion battery waste has a housing containing aluminum as an exterior that wraps around the lithium ion secondary battery. Examples of the housing include those made only of aluminum and those containing aluminum, iron, aluminum laminate, and the like.

The lithium ion battery waste may also contain, in the above housing, cathode active materials composed of one single metal oxide containing lithium and one selected from the group consisting of nickel, cobalt and manganese, or a composite metal oxides containing lithium and two or more of those, or the like, and aluminum foils (cathode substrates) to which the cathode active materials are applied and fixed by, for example, polyvinylidene fluoride (PVDF) or other organic binders. In addition, the lithium ion battery waste may contain copper, iron, or the like.

Further, the housing of the lithium ion battery waste generally contains an electrolytic solution having an electrolyte such as lithium hexafluorophosphate dissolved in an organic solvent. For example, ethylene carbonate, diethyl carbonate or the like may be used as the organic solvent.

### (Preprocessing)

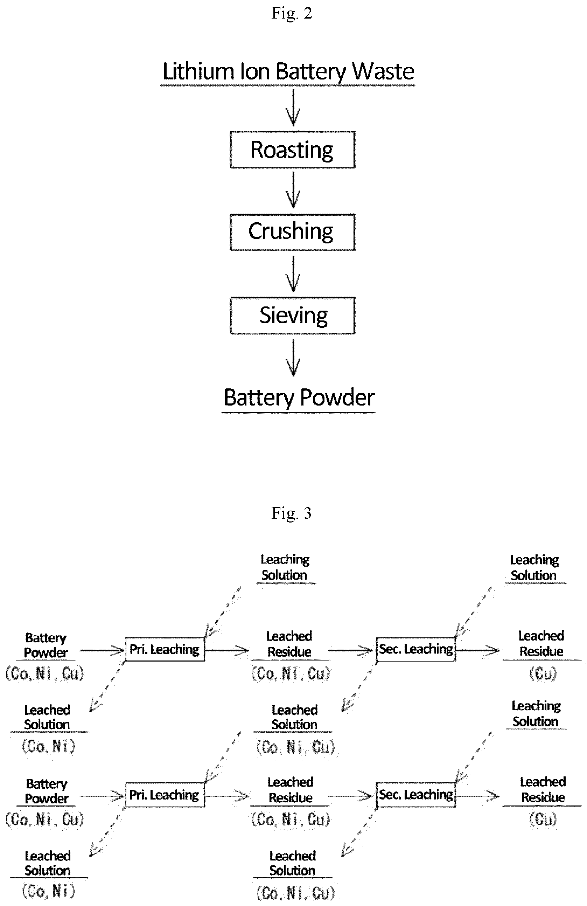

In many cases, the lithium ion battery waste is subjected to preprocessing as a dry process. The preprocessing may include at least one of roasting, crushing and sieving. The lithium ion battery waste becomes battery powder through the preprocessing. The roasting, crushing, and sieving in the preprocessing step may optionally be performed, respectively, or they may be performed in any order. In the example shown in Fig. 2, the roasting, crushing and sieving are performed in this order.

It should be noted that the battery powder means a powder obtained by subjecting the lithium ion battery waste to any process to concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste is changed to an easily dissolvable form. During the roasting, the lithium ion battery waste is preferably heated by maintaining it in a temperature range of, for example, from 450°C to 1000°C, further in a temperature range of from 600°C to 800°C, for 0.5 to 4 hours. The roasting can be carried out in either an air atmosphere or an inert atmosphere such as nitrogen, and in the air atmosphere and the inert atmospheres in this order or vice versa. The roasting can be of batch type or continuous type. For example, the batch type includes a stationary furnace, the continuous type includes a rotary kiln furnace, and other various types of furnaces can also be used.

During the roasting, at least a part of the electrolytic solution is removed from the lithium ion battery waste because the electrolytic solution is evaporated, or the like. In many cases, when the lithium ion battery waste is heated during the roasting, the components of the internal electrolyte are sequentially evaporated, starting with the component having a lower boiling point. Also, when the temperature of the lithium ion battery waste reaches a higher temperature, the resin such as the organic binder is decomposed or vaporized. Even if a part of the electrolyte and the organic binder is thus removed, a certain component such as fluorine contained in the electrolyte and the organic binder remains and may be contained in the battery powder obtained after the preprocessing step. When the roasting is carried out, the electrolytic solution is removed and rendered harmless, and the organic binder is decomposed to promote separation between the aluminum foil and the cathode active material during crushing and sieving, which will be described below. Although the roasting changes the composition of the cathode active material, the roasted material is also referred to as the cathode active material.

After the roasting, the crushing can be carried out to remove cathode materials and the like from the housing of the lithium ion battery waste. The crushing selectively separates the cathode active materials from the aluminum foils to which the cathode active materials are applied, while destroying the housing of the lithium ion battery waste.

Various known apparatuses or devices can be used in the crushing. **In** particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having an appropriate opening. Thus, aluminum or copper remains on the sieve, and battery powder from which Al or Cu has been removed to some extent can be obtained under the sieve.

The battery powder obtained in the preprocessing step contains lithium, and in addition to lithium, at least one other metal selected from the group consisting of cobalt, nickel, manganese, aluminum, iron and copper. Typically, the battery powder contains lithium and at least one of nickel and cobalt. For example, the lithium content of the battery powder is 2% to 8% by mass, the cobalt content is 1% to 30% by mass, the nickel content is 1% to 30% by mass, the manganese content is 1% to 30% by mass, the aluminum content is 1% to 10% by mass, the iron content is 1% to 5% by mass, and the copper content is 1% to 10% by mass. The battery powder may also contain 0.1% by mass to 10% by mass of fluorine.

The battery powder can be brought into contact with water prior to an acid leaching step as described below, in order to extract substantially only lithium from the battery powder. Lithium in the battery powder is thus leached into the water. **In** this case, the battery powder as the water leached residue is subjected to the acid leaching step. However, when the water leaching is carried out, the equipment is required, and the processing time increases by performing both the water leaching and the acid leaching in the acid leaching step, as well as it may be necessary to manage the roasting conditions for effectively leaching lithium with water. Further, even with such management, the leaching rate of lithium with water may not be significantly increased. Therefore, the battery powder obtained as described above may be subjected to acid leaching in the acid leaching step without the water leaching. When the water leaching is not carried out, the lithium ion concentration in the liquid can be easily maintained at a higher level in wet processes after the acid leaching step.

### (Acid Leaching Step)

In the acid leaching step, lithium and other metal contained in the lithium ion battery waste are leached with an acid by adding the above battery powder to an acidic leaching solution of sulfuric acid, nitric acid, hydrochloric acid or other inorganic acids.

As described above, in an embodiment, the acidic leaching solution is mixed with the acidic solution obtained in the electrodialysis step described below before or after the addition of the battery powder (before or after contact with the battery powder). In addition, the acidic leaching solution is allowed to contain calcium in order to precipitate the fluoride ions contained in the acidic solution.

Calcium may be present in the lithium ion battery waste and battery powder obtained by subjecting it to a preprocessing step. The calcium may be contained in the lithium ion battery waste (such as glass fibers of battery cells), and the calcium may remain in battery powder. In this case, the battery powder is brought into contact with the acidic leaching solution, thereby allowing the acidic leaching solution to contain calcium.

However, if the calcium contained in the battery powder is insufficient, calcium may be added to the acidic leaching solution separately from the battery powder. The timing of adding calcium is not particularly limited as long as it is before the end of leaching (or after the end of leaching and before solid-liquid separation when the solid-liquid separation is performed) in the acid leaching step. For example, the calcium can be previously contained in the battery powder, and this can be brought into contact with the acidic leaching solution, or before or after bringing the acidic leaching solution with the battery powder, the calcium can be added to the acidic leaching solution. Further, for example, when the battery powder is mixed with water such as distilled water to form a slurry, and an acid such as sulfuric acid is then added to the slurry to form an acidic leaching solution, the calcium may be added to the slurry before the addition of the acid, or the calcium may be added to the slurry together with the acid.

The form of calcium contained in the acidic leaching solution includes, but not particularly limited to, calcium sulfate (CaSO₄), calcium carbonate (CaCO₃), calcium hydroxide (Ca(OH)₂), other calcium compounds, and simple calcium. Among them, calcium sulfate is preferable in that it does not cause an increase in a pH of the acidic leaching solution unlike the case where calcium carbonate or calcium hydroxide is used. At least a part of the calcium may be dissolved in the liquid upon contact with the acidic leaching solution.

An amount of calcium contained in the acidic leaching solution may be appropriately determined in view of the fluoride ion concentration and other conditions in the acidic leaching after mixing it with the acidic solution. More particularly, the fluoride ion concentration is determined by analysis, and based on this, the amount of calcium may be determined. For example, the amount of calcium may be adjusted so that a molar ratio of calcium to fluoride ions (Ca/F molar ratio) is 0.1 to 0.5 (0.43 as an example). However, the amount of calcium may be determined according to other metal ion concentrations and the like.

If calcium is contained in the acidic leaching solution, it may form a precipitate in which calcium and fluoride ions are combined.

If the acidic leaching solution obtained after mixing the acidic solution with the battery powder contains a relatively larger amount of fluorine than the aluminum, the fluorine can be precipitated in the form of LiCa(AlF₆). Therefore, the fluorine can be effectively removed by separating the precipitate by solid-liquid separation or the like. In order to obtain the precipitate of LiCa(AlF₆), it is preferable that the molar ratio of fluorine to aluminum of the raw material including the battery powder (F/Al molar ratio) is 1.3 or more. Also, when the F/Al molar ratio is 2.0 or more, or 3.0 or more, most of the precipitate may be LiCa(AlF₆).

On the other hand, when the F/Al molar ratio is less than 1.3, most of the precipitate precipitated in the acid leaching step becomes Li-Al composite hydroxide. In this case as well, the precipitate contains fluorine, but when the precipitate contains more LiCa(AlF₆), the fluorine is more effectively removed. However, as a result of intensive studies, the present inventors have found that even if the F/Al molar ratio is less than 1.3, the precipitate contains more fluorine by adding calcium. Therefore, even if the F/Al molar ratio is less than 1.3, it is possible to suppress the accumulation and concentration of fluoride ions in the wet processes due to the use of the acidic solution obtained in the electrodialysis step.

In addition, since both LiCa(AlF₆) and Li-Al composite hydroxide contain Al in their compositions, the aluminum can be removed together with the fluorine by separating these precipitates. However, the Li-Al composite hydroxide has a higher solubility in the acidic leaching solution than LiCa(AlF₆). Therefore, as the precipitate contains a larger amount of LiCa(AlF₆), a larger amount of aluminum is precipitated and the aluminum can be more effectively removed. From the viewpoint of removing aluminum as described above, it is preferable that the F/Al molar ratio is 1.3 or more and the precipitate is generated in the form of LiCa(AlF₆).

The F/Al molar ratio is calculated from the total amount of fluorine and the total amount of aluminum in the raw material including the battery powder to be brought into contact with or mixed with the acidic leaching solution. When the acidic solution obtained in the electrodialysis step is mixed with the acidic leaching solution, fluoride ions in the acidic solution is also included in the raw material. Also, when a substance containing fluorine or the like other than the battery powder is brought into contact with the acidic leaching solution such as by adding it to the acidic leaching solution, that substance is also regarded as a part of the raw material.

Since the acidic solution obtained in the electrodialysis step contains fluoride ions, the mixing of the acidic leaching solution with the acidic solution tends to increase the amount of fluoride ions in the acidic leaching solution, and tends to provide the F/Al molar ratio of 1.3 or more.

When iron is used in place of calcium for precipitation/removal of fluoride ions, the iron is added during the neutralization, as will be described later, rather than during the acid leaching step. This is because when iron is added in the acid leaching step, the iron is eluted.

By the way, the acid leaching step may include only one stage of leaching, although it may include multiple stages of leaching as described below. The amount of the acid used in the acid leaching step can be determined based on the amount of the acid such as sulfuric acid, which is required for leaching all of the metals in the battery powder, among nickel, cobalt, lithium, manganese, aluminum, and iron. The amount of the acid used may be 1.0 to 1.8-fold molar equivalents of the amount of the acid required for leaching all of the above metals contained in the battery powder. If it includes only one stage of leaching, the leaching at one stage can use an acid such as sulfuric acid in an amount corresponding to that used above. **In** this case, the pH of the leached solution after the leaching at one stage may be less than 2.0.

A leached residue that has remained after the acid leaching can be separated from the metal-containing solution by means of solid-liquid separation such as filtration using a known apparatus and method such as a filter press and a thickener. Most of the copper in the battery powder may be contained in the leached residue. The solid-liquid separation may be omitted, and the metal separation step such as neutralization may be performed after leaching without solid-liquid separation.

Also, in the acid leaching step, as shown in Fig. 2, multiple leaching stages may be repeated multiple times. Each leaching stage includes a primary leaching stage of leaching the battery powder with an acidic leaching solution to separate a leached residue to obtain a leached solution; and a secondary leaching stage of leaching the leached residue in the primary leaching stage with an acidic leaching solution to obtain a leached solution. Among those leaching stages, the leached solution obtained in the final leaching stage (the secondary leaching stage if there are two stages of the primary leaching stage and the secondary leaching stage) is contained in and used for the acidic leaching solution of a next primary leaching stage.

Repeating multiple leaching stages in this manner can separate most of metals whose leaching is desired to be suppressed (copper and the like) as a leached residue without leaching them while increases a leaching rate of metals targeted for leaching (such as cobalt and/or nickel) in the battery powder.

As an example of repeating the multiple leaching stages, in the primary leaching stage, the leaching is completed before copper begins to be leached (while the copper ion concentration in the acidic leaching solution is 0.01 g/L or less), and the leached residue is removed by solid-liquid separation. As a result, a leached solution containing cobalt ions and nickel ions but containing no copper ions is obtained. The leached solution is sent to a subsequent step such as a neutralization step, which will be described below. On the other hand, the leached residue will contain undissolved, remaining cobalt and nickel, as well as copper. The secondary leaching stage is carried out to further leach cobalt and nickel from the leached residue.

**In the** first secondary leaching stage, the leached residue obtained in the primary leaching stage is brought into contact with an acidic leaching solution to leach cobalt and nickel in the leached residue. The secondary leaching stage continues the leaching even after the copper has been leached out (after the copper ion concentration in the acidic leaching solution is greater than 0.01 g/L). As a result, substantially all cobalt and nickel in the leached residue can be leached. Once the copper begins to be dissolved and cobalt and nickel are then sufficiently leached, the leaching is terminated to remove the leached residue by solid-liquid separation, leading to the leached residue containing copper and containing substantially no cobalt and nickel. The leached solution from which the leached residue has been removed contains cobalt ions, nickel ions and copper ions. It should be noted that, in the secondary leaching stage, fresh battery powder may be added to leach not only the metals in the leached residue of the primary leaching stage, but also the metals in the fresh battery powder. **In** the secondary leaching stage, the leaching is continued even after the copper has been leached, so that the cobalt and nickel in the fresh battery powder can also be sufficiently leached.

Subsequently, in the second primary leaching stage, the leached solution obtained in the first secondary leaching stage is used as an acidic leaching solution. **In** this case, if necessary, a fresh acidic leaching solution may be added. **In** the second primary leaching stage, copper ions in the leached solution are reduced by a substitution reaction due to a metal that is less noble than copper in the fresh battery powder introduced into the second primary leaching stage, and are precipitated as copper, which will be contained in the leached residue. **In** the second primary leaching stage, cobalt and nickel are eluted from the fresh battery powder, but it is terminated before copper begins to be dissolved, so that the leached residue will contain copper derived from the fresh battery powder as well as undissolved, remaining cobalt and/or nickel. This leached residue is removed by solid-liquid separation, and subjected to the leaching in the second secondary leaching stage. The leached solution from which the leached residue has been removed contains not only the cobalt ions and nickel ions eluted from the fresh battery powder, but also the cobalt ions and nickel ions carried over from the first leaching process, and is sent to the subsequent step.

The second secondary leaching stage is carried out in the same manner as the first secondary leaching stage, and so the repeated descriptions thereof will be omitted. The solid-liquid separation in the secondary leaching stage need not be performed every time. If solid-liquid separation is not performed in the secondary leaching stage, the leached solution including the leached residue is sent to the next stage, and copper will accumulate in the leached residue. If solid-liquid separation is performed in the secondary leaching stage of at least one of the multiple stages, the leached residue containing copper can be separated and removed in the secondary leaching stage at the present stage. Preferably, the solid-liquid separation is performed in the secondary leaching stage in each leaching stage, and the leached residue containing copper is removed each time.

In the primary leaching stage, 70% or less, typically 50% to 70%, of an acid may be used on a mass basis relative to the total amount of the acid used in each of the multiple leaching stages (total amount of acid used) (if each stage consists of two leaching stages, the total amount of the acids used in the primary and secondary leaching stages). The total amount of the acids used in the multiple leaching stages can be determined based on the amount of the acid required for leaching all of the metals in the battery powder, among nickel, cobalt, lithium, manganese, aluminum and iron. For example, when sulfuric acid is used as an acid in the acid leaching step, the total amount of sulfuric acid used is 1.0 to 1.8-fold molar equivalents of the amount of sulfuric acid required for leaching all of the above metals contained in the battery powder.

When the multiple leaching stages are performed as described above, the amount of the acid used in the primary leaching step is less than the case where leaching is performed at only one stage. Therefore, the leached solution after solid-liquid separation at the end of the primary leaching stage may have a pH of 3.1 to 3.5, typically 3.1 to 3.3, which is somewhat higher. If the pH is high to some extent as described above, many of fluoride ions are removed together with calcium.

When calcium is added to the acidic leaching solution in the multiple leaching stages, the addition timing is not particularly limited, but the addition is preferably performed in the primary leaching stage. In this case, the primary leaching stage tends to have a somewhat higher pH, as described above, so that many of the fluoride ions can be precipitated.

In the leaching step, whether there is only one stage leaching or repeating of multiple leaching stages, the pH of the acidic leaching solution or leached solution may be less than 3.5. Moreover, an oxidation-reduction potential (ORP value, based on silver/silver chloride potential) may be 100 mV or less.

As described above, the acid leaching step provides the metal-containing solution containing lithium ions and other metal ions as a leached solution. The other metal ions may be at least one selected from the group consisting of cobalt ions, nickel ions, manganese ions, aluminum ions, iron ions and copper ions, typically cobalt ions and/or nickel ions. The metal-containing solution may also contain fluoride ions.

The metal-containing solution obtained in the acid leaching step has a cobalt ion concentration of 10 g/L to 50 g/L, a nickel ion concentration of 10 g/L to 50 g/L, a manganese ion concentration of 0 g/L to 50 g/L, an aluminum ion concentration of 1.0 g/L to 20 g/L, an iron ion concentration of 0.1 g/L to 5.0 g/L, a copper ion concentration of 0.005 g/L to 0.2 g/L, and a fluoride ion concentration of 0.01 g/L to 20 g/L. The metal-containing solution is subjected to the metal separation step described below.

### (Neutralization)

When the metal-containing solution obtained in the acid leaching step contains aluminum ions and/or iron ions, first, the metal separation step carries out neutralization of increasing the pH of the metal-containing solution to separate a neutralized residue by solid-liquid separation to obtain a neutralized solution.

The neutralization may include an aluminum removal stage and an iron removal stage. However, if the metal-containing solution does not contain aluminum ions and/or iron ions, the aluminum removal step and/or iron removal step may be omitted.

In the aluminum removal step, the pH of the metal-containing solution is increased to precipitate at least a part of the aluminum ions and the precipitate is removed by solid-liquid separation. At this time, for example, when the pH is increased in the range of 2.5 to 5.0, in particular 3.0 to 4.5, with a pH adjusting agent at a solution temperature of 50°C to 90°C, the aluminum ions can be effectively separated while suppressing precipitation of nickel ions and/or cobalt ions.

In the iron removal step, an oxidizing agent is added and a pH adjusting agent is further added to increase the pH. As a result, the iron ions are oxidized from divalent to trivalent, and precipitated as a solid such as an oxide or iron hydroxide (Fe(OH)₃), which can be removed by solid-liquid separation. The ORP value (ORP value, based on silver/silver chloride potential) during oxidation is preferably 300 mV to 900 mV. The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid may include manganese dioxide. When the cathode active material or the like is used as the oxidizing agent, it causes a precipitation reaction which converts manganese dissolved in the liquid to manganese dioxide, so that the precipitated manganese can be removed together with iron.

In another embodiment, the acidic solution obtained in the electrodialysis step as described below is mixed with the metal-containing solution obtained in the acid leaching step. Then, during neutralization, the metal-containing solution contains iron and/or calcium. As such, the increase in the pH, typically during the aluminum removal stage, causes the iron and/or calcium contained in the metal-containing solution to precipitate the fluoride ions in the metal-containing solution.

If the metal-containing solution already contains required amounts of iron and/or calcium before neutralization, it may not be necessary to further add iron and/or calcium to it. Alternatively, if the metal-containing solution does not contain iron and/or calcium, or if the iron and/or calcium in the metal-containing solution is not sufficient, the iron and/or calcium may be added to the metal-containing solution before, during and/or after increasing the pH of the metal-containing solution to a predetermined value.

The form of calcium added to the metal-containing solution includes, but not limited to, for example, calcium sulfate, calcium carbonate, calcium hydroxide, other calcium compounds, and simple calcium. Among them, calcium carbonate is preferable because it is relatively inexpensive. Also, the form of iron added to the metal-containing solution includes, but not limited to, metal powder, metal pieces, metal lumps, or the like. Only one of iron and calcium can be added to the metal-containing solution, or both of them can be added.

The amounts of calcium and iron in the metal-containing solution may be determined based on the concentration of fluoride ions contained in the metal-containing solution (for example, when calcium or iron is added, the fluoride ion concentration at the time of addition). More particularly, the amount of calcium may be adjusted so that the molar ratio of calcium to fluoride ions (Ca/F molar ratio) is 0.1 to 0.5 (0.43 as an example), and the amount of iron may be adjusted so that the molar ratio of iron to fluoride ions (Fe/F molar ratio) is 0.1 to 0.5 (0.36 as an example). However, the amounts of calcium and iron may be determined depending on other metal ion concentrations and the like.

Further, by increasing the F/Al molar ratio of the raw material including the battery powder to some extent as described above, a large amount of aluminum can be precipitated in the form of LiCa(AlF₆) or the like in the neutralization step. When the acidic solution obtained in the electrodialysis step is mixed with the metal-containing solution, the acidic solution also corresponds to a part of the raw material. In this case, when fluorine is contained in the acidic solution, the amount of fluorine in the acidic solution is also added when calculating the F/Al molar ratio.

Examples of the pH adjusting agent used in neutralization in the above aluminum removal stage and iron removal step include lithium hydroxide, sodium hydroxide, sodium carbonate, and ammonia. A lithium hydroxide solution obtained in an electrodialysis step as described below is preferably used. In this case, lithium ions are circulated in the wet processes.

### (Manganese etc. Extraction Step)

The metal-containing solution can be subjected to solvent extraction to extract and remove the manganese ions, through the above neutralization if necessary. Here, when the metal-containing solution contains aluminum ions, the manganese ions as well as the aluminum ions are extracted and removed.

In the extraction of the manganese ions, an extracting agent containing a phosphate ester-based extracting agent is preferably used. Here, specific examples of the phosphate ester-based extracting agent include di-2-ethylhexylphosphoric acid (abbreviated name: D2EHPA or trade name: DP8R).

Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like. Among them, 5-nonyl salicylaldoxime is preferred in view of its prices and the like.

The extracting agent may be diluted with an aromatic, paraffinic, naphthenic, or other hydrocarbon organic solvent to a concentration of 10% to 30% by volume and used as a solvent.

During extraction, an equilibrium pH is preferably 2.3 to 3.5, and more preferably 2.5 to 3.0. As the pH adjusting agent used at this time, it is preferable to use an aqueous lithium hydroxide solution obtained in an electrodialysis step as described below.

At the time of extraction, it is desirable to carry out extraction by countercurrent type multistage extraction in which directions of flow of the aqueous phase and the solvent used for each extraction are opposite to each other. By doing so, the extraction of cobalt ions, nickel ions, and lithium ions can be suppressed, and the extraction rate of manganese ions can be increased. In the case of the countercurrent type multistage extraction, it is effective to set the equilibrium pH at the first stage of extraction to a value in the above range, and decrease the equilibrium pH at the time of extraction through successive stages.

### (Cobalt Extraction and Crystallization)

For example, after manganese ions are extracted, cobalt ions can be extracted and separated from a manganese extracted solution (metal-containing solution) by solvent extraction.

It is preferable to use a solvent containing a phosphonate ester-based extracting agent for the extraction of the cobalt ions. Particularly, 2-ethylhexyl 2-ethylhexylphosphonate (trade name: PC-88A, Ionquest 801) is preferable from the viewpoint of separation efficiency between nickel and cobalt. The extracting agent may be diluted with a hydrocarbon-based organic solvent so as to have a concentration of 10% by volume to 30% by volume and used as a solvent.

When extracting the cobalt ions, the equilibrium pH during extraction is preferably 5.0 to 6.0, and more preferably 5.0 to 5.5. If the pH is less than 5.0, cobalt ions may not be sufficiently extracted into the solvent. As the pH adjusting agent at this time, it is preferable to use an aqueous lithium hydroxide solution obtained in the electrodialysis step as described later.

**In the** extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction rate of cobalt ions while suppressing the extraction of nickel ions and lithium ions.

During the above extraction, not only cobalt ions but also nickel ions and lithium ions may be somewhat extracted into the solvent. **In** this case, if necessary, the solvent which has extracted the cobalt ions may be subjected to one or more scrubbing processes using a scrubbing solution to remove nickel ions and lithium ions that may be contained in the solvent. The scrubbing solution can be, for example, a sulfuric acid solution and can have a pH of 3.5 to 5.5. The scrubbed solution may contain nickel ions and lithium ions. Therefore, a part or all of the scrubbed solution is mixed with the manganese extracted solution and it is used as an extracting solution to be subjected to the extraction of the cobalt ions. As a result, the nickel ions and lithium ions can be circulated or retained in the wet processes without losing them. However, if the solvent used to extract the cobalt ions does not contain nickel ions or lithium ions, the scrubbing step may not be performed.

The solvent which has extracted the cobalt ions is then subjected to back extraction. A back extraction solution used for the back extraction may be any inorganic acid such as sulfuric acid, hydrochloric acid, and nitric acid, but sulfuric acid is preferable when a sulfate is obtained in the next crystallization. Here, it is carried out under pH conditions such that all the cobalt ions transfer from the solvent to the back extracting solution as much as possible. More particularly, the pH is preferably in the range of 2.0 to 4.0, and more preferably in the range of 2.5 to 3.5.

The back extracted solution can be subjected to crystallization. Here, the back-extracted solution is heated to, for example, 40°C to 120°C and concentrated. As a result, the cobalt ions are crystallized to obtain a cobalt salt such as cobalt sulfate. The cobalt salt preferably has a nickel content of 5 ppm by mass or less, and thus nickel has been sufficiently removed, so that it can be effectively used as a raw material for producing lithium ion secondary batteries and other batteries. Here, the crystallized solution may contain uncrystallized cobalt ions and lithium ions. Therefore, it is preferable that the crystallized solution is mixed with the back extracted solution before the crystallization and used for recrystallization, or used for adjusting the cobalt ion concentration of the scrubbing solution used for the solvent which has extracted the cobalt ions, or mixed with the manganese extracted solution and used for the extraction of the cobalt ions. By doing so, the cobalt ions and lithium ions can be circulated or retained and concentrated in the wet processes without losing them.

### (Nickel Extraction and Crystallization)

The cobalt extracted solution (metal-containing solution) after the cobalt ions have been extracted can be subjected to solvent extraction to extract nickel ions.

In the extraction of nickel, a carboxylic acid-based extracting agent is preferably used to separate nickel ions from the cobalt extracted solution. Examples of the carboxylic acid-based extracting agent include neodecanoic acid and naphthenic acid. Among them, the neodecanoic acid is preferred because of its ability to extract nickel ions. The extracting agent may be diluted with an aromatic, paraffinic, naphthenic, or other hydrocarbon organic solvent to a concentration of 10% to 30% by volume and used as a solvent.

The equilibrium pH during the extraction is preferably 6.0 to 8.0, and more preferably 6.8 to 7.2. The pH adjusting agent used to adjust the pH at this time is preferably an aqueous lithium hydroxide solution obtained in an electrodialysis step as described below. In the extraction of the nickel ions, it is desirable to perform the countercurrent type multistage extraction. By doing so, the extraction of lithium ions can be suppressed, and the extraction rate of nickel ions can be increased.

The solvent which has extracted the nickel ions may optionally be subjected to one or more scrubbing processes using a scrubbing solution to remove lithium ions that may be contained in the solvent. The scrubbing solution can be, for example, a sulfuric acid solution and can have a pH of 5.0 to 6.0. Here, the resulting scrubbed solution may contain lithium ions. Therefore, it is preferable that a part or all of the scrubbed solution is mixed with the cobalt extracted solution and it is used as the extracting solution to be subjected to the extraction of the nickel ions. As a result, the lithium ions can be circulated or retained and concentrated in the wet processes without losing them. However, if the solvent used to extract the nickel ions does not contain lithium ions, the scrubbing may not be performed.

The solvent is then subjected to back extraction using a back extraction solution such as sulfuric acid, hydrochloric acid, or nitric acid. The sulfuric acid is particularly preferred if crystallization is then performed. The pH is preferably in the range of 1.0 to 3.0, and more preferably 1.5 to 2.5. Although the O/A ratio and the number of times can be determined as needed, the O/A ratio is 5 to 1, and more preferably 4 to 2.

When the extracted solution such as a nickel sulfate solution is obtained by the back extraction, electrolysis and dissolution can be carried out as needed, and the solution can be then heated to 40°C to 120°C in the crystallization to crystalize the nickel ions as a nickel salt such as nickel sulfate. This provides the nickel salt. Here, the crystallized solution may contain uncrystallized nickel ions and lithium ions. Therefore, the crystallized solution is mixed with the back extracted solution before the crystallization and used for recrystallization, or used for adjusting the nickel ion concentration of the scrubbing solution with respect to the solvent which has extracted the nickel ions, or mixed with the cobalt extracted solution and used for the extraction of the nickel ions. By repeatedly using them in the steps in this manner, the nickel ions and lithium ions can be circulated or retained and concentrated in the wet processes without losing them.

The nickel extracted solution from which the nickel ions have been extracted mainly contains lithium ions and may be added to the acidic leaching solution in the leaching step. This allows the lithium ions contained in the nickel extracted solution to be circulated in a series of steps from the acid leaching step to the nickel extraction. Preferably, after the lithium ion concentration in the nickel extracted solution has been increased to some extent by thus circulating the lithium ions, an electrodialysis step as described below can be carried out.

### (Electrodialysis Step)

The metal-containing solution such as the extracted nickel solution obtained in the metal separation step described above is one in which lithium ions and metals other than impurities are sufficiently separated, and mainly contains lithium ions. The metal-containing solution contains fluoride ions (F⁻) as impurities derived from, for example, the electrolytic solution contained in the battery powder.

The metal-containing solution may contain trace amounts of cations such as nickel ions and magnesium ions that could not be completely separated in the metal separation step. The nickel ions and magnesium ions are cations like lithium ions, and exhibit the same behavior as lithium ions during electrodialysis, so that it is difficult to separate them from lithium ions. Also, when the electrodialysis is performed on the metal-containing solution containing the nickel ions and magnesium ions, hydroxides of nickel and magnesium may be generated in the resulting lithium hydroxide solution, and the electrodialysis cannot be continued due to troubles of the steps. Therefore, in such a case, it is desirable to wash the metal-containing solution to remove cations such as nickel ions and magnesium ions prior to the electrodialysis which will be described below. The washing can be carried out using an ion exchange resin or a chelate resin, for example.

The metal-containing solution prior to the electrodialysis step may, for example, have a lithium ion concentration of 1.0 g/L to 30.0 g/L and a fluoride ion concentration of 0.01 g/L to 5.0 g/L.

When a lithium hydroxide solution is obtained from the above metal-containing solution, application of carbonation, chemical conversion, or the like causes impurities to remain in the lithium hydroxide solution without being removed. The use of the lithium hydroxide solution containing larger amounts of impurities as a pH adjusting agent in the metal separation step is undesirable because not only lithium ions but also impurities are circulated or accumulated in the wet processes.

Therefore, in this embodiment, the metal-containing solution is subjected to the electrodialysis step to obtain a lithium hydroxide solution and an acidic solution from the metal-containing solution. As a result, since most of the impurities are contained in the acidic solution, it is possible to obtain the lithium hydroxide solution from which the impurities have been sufficiently removed.

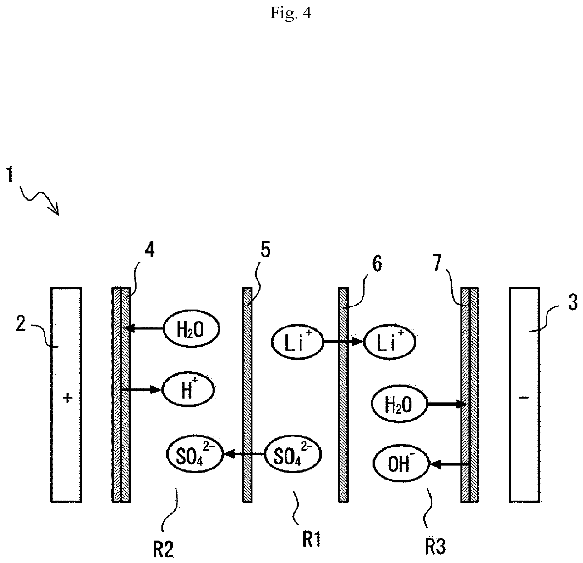

The electrodialysis step can be performed, for example, using a commercially available bipolar membrane electrodialysis device. As an example, a bipolar membrane electrodialysis device 1 (hereinafter, also referred to as a "electrodialysis device") shown in Fig.4 has, in a cell, a positive electrode 2 and a negative electrode 3; and a bipolar membrane 4, an anion exchange membrane 5, a cation exchange membrane 6, and a bipolar membrane 7, which are arranged in this order between the positive electrode 2 and the negative electrode 3 from the positive electrode 2 side to the negative electrode 3 side. These separate the interior of the cell into a desalination chamber R1 between the anion exchange membrane 5 and the cation exchange membrane 6, an acidic chamber R2 between the bipolar membrane 4 and the anion exchange membrane 5, and an alkaline chamber R3a between the cation exchange membrane 6 and the bipolar membrane 7. Each of the bipolar membranes 4 and 7 is constructed by laminating a cation exchange layer and an anion exchange layer.

In order to carry out electrodialysis by the illustrated electrodialysis device 1, the metal-containing solution is placed in the desalination chamber R1, and pure water is also placed in each of the acidic chamber R2 and the alkaline chamber R3, and a predetermined voltage is applied to the positive electrode 2 and the negative electrode 3. Then, lithium ions (Li⁺) in the metal-containing solution in the desalination chamber R1 pass through the cation exchange membrane 6 and move to the alkaline chamber R3. In the alkaline chamber R3, water (H₂O) is decomposed by the bipolar membrane 7 and hydroxide ions (OH⁻) are present, so that a lithium hydroxide solution is obtained.

On the other hand, the anions of the inorganic acid in the metal-containing solution in the desalination chamber R1 pass through the anion exchange membrane 5 and move to the acidic chamber R2. In the acidic chamber R2, an acidic solution such as a sulfuric acid solution is generated by the anions and hydrogen ions (H⁺) generated from water (H₂O) by the bipolar membrane 4. It should be noted that the anions of the inorganic acid are sulfate ions (SO₄²⁻) in the illustrated example, but they may be nitrate ions (NO₃⁻) or chloride ions (Cl⁻) depending on the type of the acid used in the acid leaching step.

In the desalination chamber R1, the lithium salt is separated from the metal-containing solution as described above, and a desalinated solution remains. The anion concentration of the inorganic acid tends to be higher in the acidic solution than in the lithium hydroxide solution, and tends to be higher in the desalinated solution than in the lithium hydroxide solution.

In the electrodialysis, most of the impurity fluoride ions in the metal-containing solution move from the desalination chamber R1 to the acidic chamber R2 through the anion exchange membrane 5 and are contained in the acidic solution. As a result, a lithium hydroxide solution substantially free of fluoride ions is obtained in the alkaline chamber R3. Therefore, the fluoride ion concentration of the lithium hydroxide solution is lower than that of the acidic solution.

The lithium hydroxide solution from which impurities have been removed by electrodialysis as described above can be effectively used as a pH adjusting agent in the metal separation step. After the electrodialysis, the lithium hydroxide solution may optionally be used as a pH adjusting agent after increasing the lithium ion concentration of the lithium hydroxide solution by heat concentration or the like.

The acidic solution obtained by the electrodialysis contains fluoride ions. Herein, the acidic solution can be discarded as it is, but as described above, herein, the acidic solution is mixed with the acidic leaching solution or the metal-containing solution before neutralization and circulated.

### (Crystallizing Step)

A part of the lithium hydroxide solution obtained in the electrodialysis step can be subjected to a crystallizing step. For example, when the lithium hydroxide solution is returned to the wet process as a pH adjusting agent as described above, the lithium in the battery powder newly added to the wet process may gradually increase the lithium ion concentration in the liquid. Depending on the lithium ion concentration, the crystallizing step may be performed to recover lithium hydroxide.

In the crystallizing step, a crystallizing operation such as heat concentration or vacuum distillation can be performed in order to crystallize lithium hydroxide. For the heat concentration, a higher temperature during crystallizing leads to faster progression of the process, which is preferable. However, the temperature of the crystallized product after crystallizing can be a temperature of less than 60°C at which water of crystallization is not released. This is because anhydrous lithium hydroxide from which the water in the crystallized product has been released is deliquescent and thus difficult to be handled.

In addition, a pulverization process or the like can be then performed in order to adjust the above lithium hydroxide to required physical properties.

### Examples

Next, the method for recovering metals as described above was experimentally carried out and the effects thereof were confirmed, as described below. However, the descriptions herein are merely for illustrative and are not intended to be limited.

### (Test Example 1)

The metal-containing solution obtained by leaching the battery powder with sulfuric acid was subjected to neutralization, manganese extraction, cobalt extraction and nickel extraction to separate each metal.

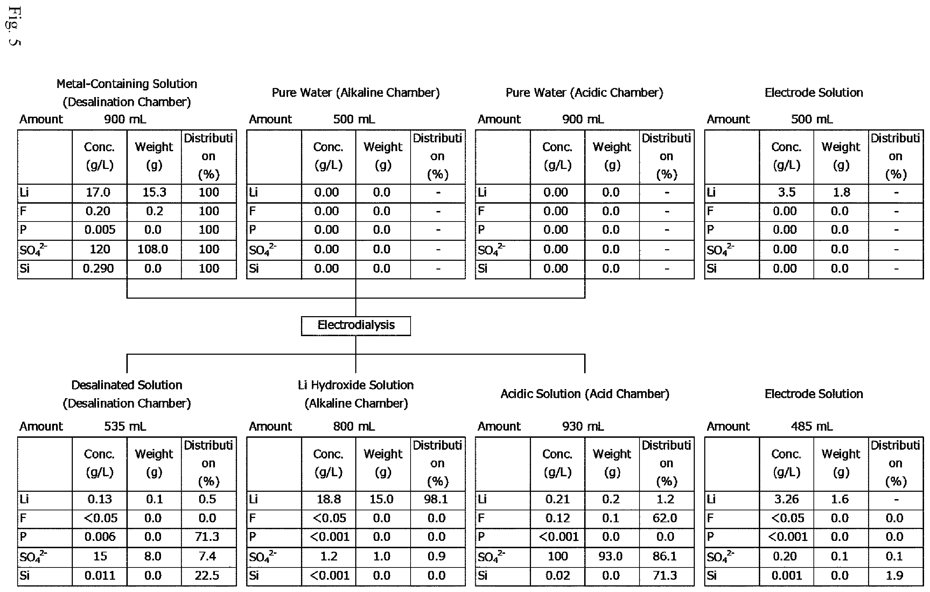

The separated metal-containing solution was then subjected to electrodialysis using a bipolar membrane electrodialysis device (manufactured by ASTOM Corporation) having a structure as shown in Fig. 4. Here, the metal-containing solution having each composition shown in Fig. 5, pure water, and an electrode solution were introduced into the desalination chamber, the alkaline chamber, the acidic chamber, and the electrode chamber, respectively. The electrodialysis was carried out under the condition of a low voltage of 32V.

The results are also shown in Fig 5. In Fig. 5, the reason why the distribution rates of the ions in the desalinated solution after electrodialysis, the lithium hydroxide solution, the acidic solution, and the electrode solution do not reach 100% even if the respective distribution rates are added up would be because of the variation in analytical values (it does not include those which could not be quantified due to the lower limit of analysis, or the like).

It is found from Fig. 5 that the fluoride ion concentration, the phosphorus concentration and the silicon concentration in the lithium hydroxide solution obtained after electrodialysis are all sufficiently low. This indicates that the electrodialysis provides a lithium hydroxide solution from which most of the impurities have been removed. Further, as can be seen from Fig. 5, the phosphorus contained in the metal-containing solution tends to remain in the desalinated solution and not be distributed in the acidic solution. For this reason, even if the acidic solution is mixed with the acidic leaching solution in the acid leaching step and used, accumulation of phosphorus and an increase in phosphorus concentration do not occur in a series of steps from the acid leaching to the extraction.

It was found from the above tests that the lithium hydroxide solution can be prepared from the metal-containing solution, and that the acidic solution obtained by electrodialysis contains a large amount of fluoride ions as impurities.

### (Test example 2)

Battery powder was subjected to two-stage water leaching and filtration, and acid leaching using 95% by weight of sulfuric acid to obtain a metal-containing solution, which was then neutralized without filtration while containing the leached residue to precipitate aluminum ions. The pH at the end of the acid leaching was 1.12 and the ORP value (based on silver/silver chloride potential) was 30 mV. For neutralization, 250 g/L of sodium hydroxide was used to increase the pH of the metal-containing solution to 4.02 (ORP value (based on silver/silver chloride potential): 86 mV), and iron powder (Fe powder) was then added to increase the pH to 4.27 (ORP value (based on silver/silver chloride potential): 94 mV).

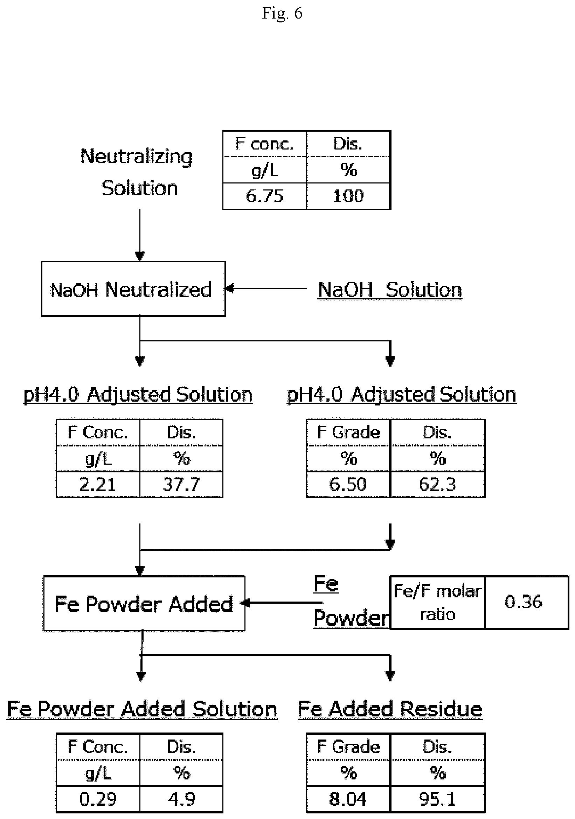

Fig. 6 shows the composition, grade and distribution rate of the battery powder, each liquid and residue. In addition, in Fig. 6, "%" of the grade means % by mass. It is found from Fig. 6 that the fluoride ion concentration after adding the iron powder (0.29 g/L) was significantly reduced as compared to that before adding the iron powder during neutralization (2.21 g/L). It can be said from the results that the fluoride ions as impurities can be effectively precipitated and removed by adding iron to the metal-containing solution.

### (Test Example 3)

After subjecting the battery powder to the primary leaching stage (1^{st} Leaching Stage) as acid leaching, the leached residue obtained in the first leaching stage was leached again in a secondary leaching stage (2^{nd} Leaching Stage). The resulting leached solution in the primary leaching stage was then neutralized to remove aluminum ions (aluminum removal neutralization) to obtain a neutralized solution and a neutralized residue. Here, the F/Al molar ratio of the raw material battery powder was 3.3.

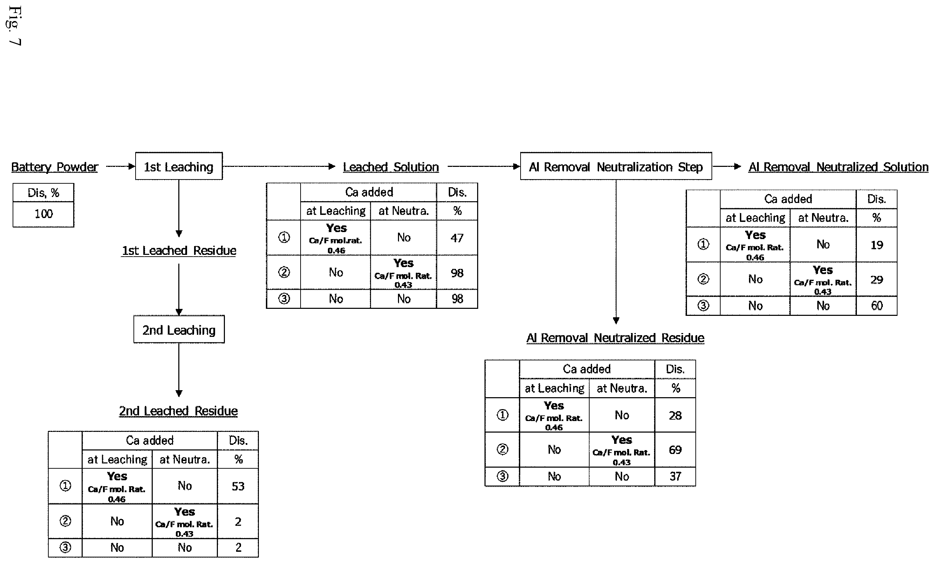

Here, multiple tests were conducted by changing the conditions of whether or not calcium was added in the primary leaching stage during leaching and whether or not calcium was added during neutralization. The results are shown in Fig. 7. In addition, in Fig. 7, "%" of the grade means % by mass.

As can be seen from Fig. 7, when calcium was added either during leaching or during neutralization, the leached solution and/or the neutralized solution had a decreased fluoride ion concentration (F concentration) and a decreased distribution rate as compared to the case where calcium was not added during the leaching and neutralization. Accordingly, it is found that fluoride ions can be effectively removed in a manner where calcium is contained during leaching or neutralization.

Further, the same test as described above was conducted by changing the conditions of whether or not calcium was added in the primary leaching stage during leaching, with the exception that the F/Al molar ratio of the raw material battery powder was 0.85. The results are shown in Table 1. It is found from Table 1 that the addition of calcium decreases the distribution rate of fluorine in both the acid leached solution and the neutralized solution, and increases the distribution rate of fluorine in the acid leached residue and the neutralized residue. From this result, it can be said that calcium can effectively precipitate fluoride ions even if the F/Al molar ratio is somewhat small.

**Table 1**

| Ca Addition | Acid Leached Residue | Acid Leached Solution | Neutralized Residue | Neutralized Solution |
|---|---|---|---|---|
| | F Distribution Rate (%) | F Distribution Rate (%) | F Distribution Rate (%) | F Distribution Rate (%) |
| Yes | 5 | 95 | 26 | 69 |
| No | 3 | 97 | 19 | 78 |

### (Test Example 4)

Raw materials M1 to M6 consisting of six battery powders P1 to P6 were obtained by changing the type of lithium ion battery waste, the roasting atmosphere (air or inert) and other conditions. The raw materials M7 and M8 were prepared by adding LiF to the battery powder P3. Table 3 shows the F/Al molar ratios and the Al and F grades of the raw materials M1 to M8.

**Table 2**

| | Battery Powder | F/Al | Grade by mass) | |
|---|---|---|---|---|
| | | | Al | F |
| Raw Material M1 | Battery Powder P1 | 6.9 | 1.2 | 5.6 |
| Raw Material M2 | Battery Powder P2 | 3.3 | 2.5 | 5.8 |
| Raw Material M3 | Battery Powder P3 | 1.3 | 4.1 | 3.8 |
| Raw Material M4 | Battery Powder P4 | 0.8 | 6.2 | 3.5 |
| Raw Material M5 | Battery Powder P5 | 0.8 | 2.5 | 1.4 |
| Raw Material M6 | Battery Powder P6 | 0.6 | 8.4 | 3.7 |
| Raw Material M7 | Battery Powder P3 | 3.0 | - | - |
| Raw Material M8 | Battery Powder P3 | 2.0 | - | - |

For each of the above raw materials M1 to M6, the metals were leached using sulfuric acid in one cycle of the primary leaching stage and the secondary leaching stage shown in Fig 2. At this time, in the primary leaching stage, calcium sulfate was added so that the Ca/Al molar ratio of the acidic leaching solution was 1.0. The primary leaching stage had a pH of 3.0 or less, and the secondary leaching stage had a pH of 1.5 or less. The raw materials M7 and M8 were leached in only one stage, and calcium sulfate was added so that the Ca/Al molar ratio of the acidic leaching solution was 1.0, and the pH at the end of leaching was 1.0.

The metal-containing solution which was the leached solution in the above leaching step was then subjected to the neutralization step of adding 4M LiOH to adjust the pH to 4.0. The neutralized residue thus obtained was analyzed by the X-ray diffraction. As a result, it was found that the neutralized residue contained aluminum in the form of LiCa(AlF₆) and/or Li-Al composite hydroxide.

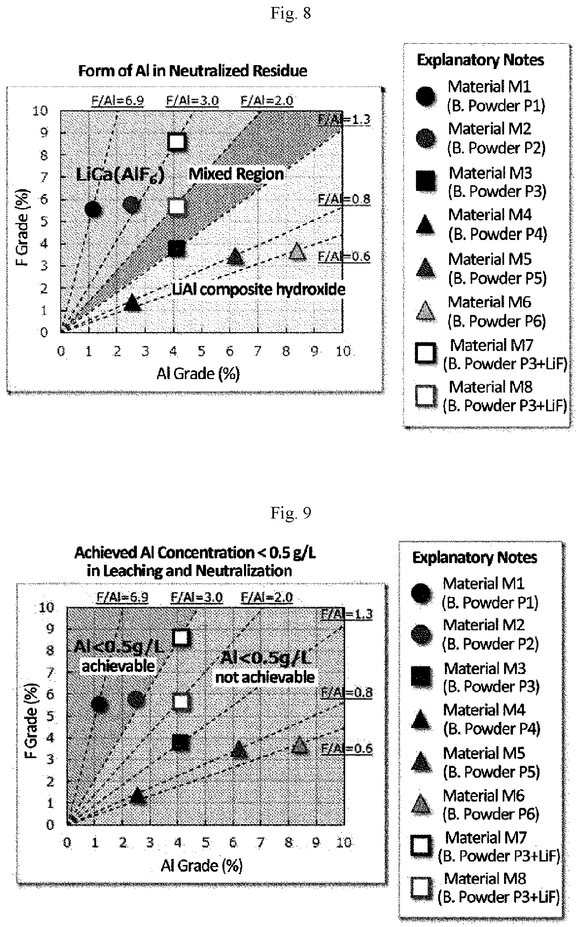

Based on these results, Fig. 8 shows a graph showing the relationship between the Al grade and the F grade of the raw material, to which the form in the neutralized residue was added. As shown in Fig. 8, when the F/Al molar ratio of the raw material was less than 1.3, the aluminum in the neutralized residue was substantially in the form of Li-Al composite hydroxide. On the other hand, when the F/Al molar ratio of the raw material was 1.3 or more, the aluminum in the neutralized residue was in the form of the mixture of Li-Al composite hydroxide and LiCa(AlF₆). Furthermore, when the F/Al molar ratio of the raw material was 2.0 or more, the aluminum in the neutralized residue was substantially in the form of LiCa(AlF₆).

Further, in the test using each of the above raw materials M1 to M8, whether each solution of the leached solution obtained in the acid leaching step or the neutralized solution obtained in the neutralization step could achieve a low aluminum ion content of less than 0.5 g/L was confirmed. The results are shown in Fig. 9. As can be seen from Fig. 9, when the F/Al molar ratio of the raw material is 3.0 or more, the aluminum ion concentration of each solution is further decreased.

As described above, according to the method for recovering metals as described above, it was found that an acidic solution obtained in the electrodialysis and containing fluoride ions can be appropriately processed.

### Description of Reference Numerals

1. bipolar membrane electrodialysis device
2 positive electrode
3 negative electrode
4, 7 bipolar membrane
5 anion exchange membrane
6 cation exchange membrane
R1 desalination chamber
R2 Acidic chamber
R3 alkaline chamber

### Embodiments

The present disclosure further includes the following embodiments:
[Embodiment 1] A method for recovering metals from battery powder of lithium ion battery waste, the method comprising:
   an acid leaching step of leaching the metals in the battery powder into an acidic leaching solution to obtain a metal-containing solution containing lithium ions and other metal ions;
   a metal separation step of separating the other metal ions from the metal-containing solution; and,
   after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions,
   wherein the acidic solution obtained in the electrodialysis step is mixed with the acidic leaching solution, the acidic leaching solution comprises calcium in the acid leaching step, and the fluoride ions are precipitated by the calcium.
[Embodiment 2] The method for recovering metals according to embodiment 1, wherein, in the acid leaching step, the calcium is added to the acidic leaching solution so that the acidic leaching solution comprises calcium.
[Embodiment 3] The method for recovering metals according to embodiment 1, wherein the metal separation step comprises neutralization of increasing a pH of the metal-containing solution to precipitate at least a part of the other metal ions.
[Embodiment 4] A method for recovering metals from battery powder of lithium ion battery waste, the method comprising:
   an acid leaching step of leaching the metals in the battery powder into an acidic leaching solution to obtain a metal-containing solution containing lithium ions and other metal ions;
   a metal separation step of separating the other metal ions from the metal-containing solution, the metal separation step comprising neutralization of increasing a pH of the metal-containing solution to precipitate at least a part of the other metal ions; and,
   after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions,
   wherein the acidic solution obtained in the electrodialysis step is mixed with the metal-containing solution obtained in the acid leaching step, the metal-containing solution comprises iron and/or calcium during the neutralization, and the fluoride ions are precipitated by the iron and/or calcium.
[Embodiment 5] The method for recovering metals according to embodiment 4, wherein iron and/or calcium are added to the metal-containing solution after the acid leaching step so that the metal-containing solution comprises iron and/or calcium during the neutralization.
[Embodiment 6] The method for recovering metals according to any one of embodiments 3 to 5, wherein the other metal ions comprise aluminum ions, wherein the neutralization comprises an aluminum removal stage of increasing a pH of the metal-containing solution to a range of 4.0 to 5.0 to precipitate at least a part of the aluminum ions, and wherein the fluoride ions are precipitated in the aluminum removal stage.
[Embodiment 7] The method for recovering metals according to any one of embodiments 3 to 5, wherein the lithium hydroxide solution is used as a pH adjusting agent in the neutralization.
[Embodiment 8] The method for recovering metals according to any one of embodiments 1 to 5, wherein a fluoride ion concentration of the lithium hydroxide solution is lower than that of the acidic solution.
[Embodiment 9] The method for recovering metals according to any one of embodiments 1 to 5, wherein a molar ratio of fluorine to aluminum of a raw material including the battery powder (F/Al molar ratio) is 1.3 or more.

## Claims

1. A method for recovering metals from battery powder of lithium ion battery waste, the method comprising:
- an acid leaching step of leaching the metals in the battery powder into an acidic leaching solution to obtain a metal-containing solution containing lithium ions and other metal ions;
- a metal separation step of separating the other metal ions from the metal-containing solution; and,
- after the metal separation step, an electrodialysis step of subjecting the metal-containing solution containing lithium ions and fluoride ions as impurities to electrodialysis using a bipolar membrane to obtain a lithium hydroxide solution and an acidic solution comprising fluoride ions,
wherein the acidic solution obtained in the electrodialysis step is mixed with the acidic leaching solution, the metal-containing solution comprises iron, and the fluoride ions are precipitated by the iron in the metal separation step.

2. The method for recovering metals according to claim 1, wherein iron is added to the metal-containing solution after the acid leaching step so that the metal-containing solution comprises iron in the metal separation step.

3. The method for recovering metals according to claim 1 or 2, wherein the other metal ions comprise aluminum ions, wherein the metal separation step comprising neutralization of increasing a pH of the metal-containing solution to precipitate at least a part of the other metal ions, wherein the neutralization comprises an aluminum removal stage of increasing a pH of the metal-containing solution to precipitate at least a part of the aluminum ions, and wherein the fluoride ions are precipitated in the aluminum removal stage.

4. The method for recovering metals according to claim 3, wherein the lithium hydroxide solution is used as a pH adjusting agent in the neutralization.

5. The method for recovering metals according to any one of claims 1 to 4, wherein a fluoride ion concentration of the lithium hydroxide solution is lower than that of the acidic solution.

6. The method for recovering metals according to any one of claims 1 to 5, wherein a molar ratio of fluorine to aluminum of a raw material including the battery powder (F/Al molar ratio) is 1.3 or more.

7. The method for recovering metals according to claim 1 or 2, wherein the other metal ions comprise aluminum ions, wherein the metal separation step comprising an aluminum removal stage of increasing a pH of the metal-containing solution to precipitate at least a part of the aluminum ions, and wherein iron is added to the metal-containing solution after the increasing the pH of the metal-containing solution.

8. The method for recovering metals according to claim 7, the lithium hydroxide solution is used as a pH adjusting agent in the aluminum removal stage.

9. The method for recovering metals according to claim 7 or 8, wherein a fluoride ion concentration of the lithium hydroxide solution is lower than that of the acidic solution.

10. The method for recovering metals according to any one of claims 7 to 9, wherein a molar ratio of fluorine to aluminum of a raw material including the battery powder (F/Al molar ratio) is 1.3 or more.
